# EUROPEAN PATENT APPLICATION

(11) **EP 3 285 355 A2**
(43) Date of publication of application: **21.02.2018**
(21) Application number: 17183687.7
(22) Date of filing: 28.07.2017
(51) Int. Cl.: H02J 7/00

(54) **ELECTRONIC EQUIPMENT, CHARGER, CHARGE SYSTEM AND CHARGE METHOD**

(30) Priority: 15.08.2016 WO PCT/CN2016/095374
(71) Applicant: Beijing Xiaomi Mobile Software Co., Ltd., Beijing 100085 (CN)
(72) Inventor: SUN, Wei, BEIJING, 100085 (CN); LEI, Zhenfei, BEIJING, 100085 (CN); WANG, Xiangdong, BEIJING, 100085 (CN)
(74) Representative: Delumeau, François Guy

(57) **Abstract**

The present disclosure discloses electronic equipment, a charger, a charge system and a charge method. The charge method includes that: a processor acquires (501) a type of a charger connected with a hardware charge interface through a communication control chip; when the charger is a preset charger, the processor sets (502) a direct charge control switch into an on state, and controls the charger to perform charging according to a first charge mode; and when the charger is not the preset charger, the processor sets (503) the direct charge control switch into an off state, and performs charging through one or more charge chips according to a second charge mode.

## Description

### TECHNICAL FIELD

The present disclosure generally relates to electronics, and more particularly, to electronic equipment, a charger, a charge system and a charge method.

### BACKGROUND

Electronic equipment such as a smart mobile phone and a tablet computer is usually charged through a wired charger.

Along with continuous increase of battery capacity of electronic equipment, Quick Charge (QC) methods continuously emerge. In a related technology, there are mainly two QC methods: high-voltage charge and direct charge. At present, electronic equipment may support only one of the two QC methods, and may not achieve compatibility with both of the QC methods at the same time.

### SUMMARY

Accordingly, the present invention provides electronic equipment, a charger, a charge system and a charge method in accordance with claims which follow.

According to a first aspect of the embodiments of the present disclosure, electronic equipment is provided, which includes:
a processor, a communication control chip, a direct charge control switch, one or more charge chips, a hardware charge interface and a battery, wherein
the processor is electrically connected with the communication control chip, the processor is electrically connected with the direct charge control switch, and the processor is also electrically connected with the one or more charge chips;
the communication control chip, the direct charge control switch and the charge chip are all electrically connected with the hardware charge interface; and
the direct charge control switch and the one or more charge chips are all electrically connected with the battery.

Optionally, the processor may be configured to:
acquire a type of a charger connected with the hardware charge interface through the communication control chip;
set the direct charge control switch into an on state and control the charger to perform charging according to a first charge mode when the charger is a preset charger; and
set the direct charge control switch into an off state and perform charging through one or more charge chips according to a second charge mode when the charger is not the preset charger.

The processor acquires the type of the charger connected with the hardware charge interface through the communication control chip; when the charger is the preset charger, the processor sets the direct charge control switch into the on state, and controls the charger to perform charging according to the first charge mode; and when the charger is not the preset charger, the processor sets the direct charge control switch into the off state, and performs charging through the one or more charge chips according to the second charge mode. The problem that the electronic equipment may not at the same time achieve compatibility with both QC methods in the related technology is solved, and an effect of charging the electronic equipment according to different types of chargers by virtue of different charge modes to achieve compatibility of the electronic equipment with different charge modes is achieved.

Optionally, the first charge mode may be a direct charge mode; and the second charge mode may be an ordinary charge mode or a high-voltage charge mode.

Optionally, the one or more charge chips may be at least two charge chips arranged in parallel.

Optionally, the at least two charge chips may be configured to input a charge current to the battery in the second charge mode respectively.

Optionally, the communication control chip may include: a logic control chip and a transmission chip, and the transmission chip may support a preset transmission protocol;
the logic control chip may be electrically connected with the hardware charge interface and the transmission chip respectively; and
the transmission chip may be electrically connected with the logic control chip and the processor respectively.

The logic control chip may be configured to, when the charger is connected to the hardware charge interface, establish a communication connection with the charger, and the transmission chip may be configured to send a charge control instruction generated by the processor to the charger in the first charge mode according to the preset transmission protocol.

Optionally, the preset transmission protocol may be a Power Delivery (PD) protocol.

Optionally, the hardware charge interface may be a Universal Serial Bus TYPE-C (USB TYPE-C) interface; the USB TYPE-C interface may include: a Ground (GND) pin, Voltage Bus (VBUS) pins and a Configuration Channel (CC) pin;
the direct charge control switch may be electrically connected with the VBUS pins in the USB TYPE-C interface;
the communication control chip may be electrically connected with the VBUS pins or the CC pin in the USB TYPE-C interface; and
the GND pin in the USB TYPE-C interface may be grounded.

Optionally, a number of the VBUS pins may be at least two; and the at least two VBUS pins may be electrically connected.

Optionally, the at least two VBUS pins may be configured to reduce direct current impedance and increase the charge current.

Optionally, the communication control chip may also include: an encryption chip; and the encryption chip may be electrically connected with the transmission chip.

According to a second aspect of the embodiments of the present disclosure, a charger is provided, which includes: a rectification control chip, a communication control chip and a hardware charge interface, wherein
the communication control chip and the rectification control chip are both electrically connected with the hardware charge interface; and
the communication control chip is electrically connected with the rectification control chip.

Optionally, the communication control chip may include: a logic control chip and a transmission chip, and the transmission chip may support a preset transmission protocol;
the logic control chip may be electrically connected with the hardware charge interface and the transmission chip respectively; and
the transmission chip may be electrically connected with the logic control chip.

Optionally, the preset transmission protocol may be a PD protocol.

Optionally, the hardware charge interface may be a USB TYPE-C interface; the USB TYPE-C interface may include: a GND pin, VBUS pins and a CC pin;
the rectification control chip may be electrically connected with the VBUS pins in the USB TYPE-C interface;
the communication control chip may be electrically connected with the VBUS pins or the CC pin in the USB TYPE-C interface; and
the GND pin in the USB TYPE-C interface may be grounded.

Optionally, a number of the VBUS pins may be at least two; and the at least two VBUS pins may be electrically connected.

Optionally, the communication control chip may also include: an encryption chip; and the encryption chip may be electrically connected with the transmission chip.

According to a third aspect of the embodiments of the present disclosure, a charge system is provided, which includes: electronic equipment and a charger, wherein
the electronic equipment includes any electronic equipment in the first aspect; and
the charger includes any charger in the second aspect.

According to a fourth aspect of the embodiments of the present disclosure, a charge method is provided, which is applied to any electronic equipment in the first aspect, the method including that:
a processor acquires a type of a charger connected with a hardware charge interface through a communication control chip;
when the charger is a preset charger, the processor sets a direct charge control switch into an on state, and controls the charger to perform charging according to a first charge mode; and
when the charger is not the preset charger, the processor sets the direct charge control switch into an off state, and performs charging through one or more charge chips according to a second charge mode.

All the advantages and characteristics of the different embodiments of the electronic equipment in the first aspect apply to this charge method.

Optionally, the step that the processor acquires the type of the charger connected with the hardware charge interface through the communication control chip may include that:
the processor detects whether the charger supports a preset direct charge protocol or not through the communication control chip, and detects whether the charger supports a high-flux QC protocol or not through the charge chip; and
if the charger supports the preset direct charge protocol and the charger supports the high-flux QC protocol, the processor determines that the charger is the preset charger.

Optionally, the step that the charger is controlled to perform charging according to the first charge mode may include that:
the processor detects whether a voltage of a battery reaches an ith threshold value or not for the ith time through the charge chip, i being a positive integer;
when the voltage of the battery reaches the ith threshold value, the processor generates a charge control instruction according to the voltage of the battery;
the processor sends the charge control instruction to the charger through the communication control chip, the charge control instruction being configured to control the charger to reduce a charge current; and
it is set that i=i+1, and the step that the processor detects whether the voltage of the battery reaches the ith threshold value or not for the ith time through the charge chips is re-executed, the ith threshold value being smaller than or equal to an (i+1)th threshold value.

Optionally, the method may also include that:
the processor detects whether the charge current of the charger is lower than a current threshold value or not through the one or more charge chips; and
when the charge current is lower than the current threshold value, the processor sets the direct charge control switch into the off state, and performs charging through the one or more charge chips according to the second charge mode.

Optionally, the step that the processor sends the charge control instruction to the charger through the communication control chip may include that:
the processor sends the charge control instruction to the charger through a transmission chip according to a preset transmission protocol.

Optionally, the preset transmission protocol may be a PD protocol.

Optionally, the step that the processor sends the charge control instruction to the charger through the transmission chip according to the preset transmission protocol may include that:
the processor encrypts the charge control instruction through the transmission chip and an encryption chip; and
the processor sends the encrypted charge control instruction to the charger through the transmission chip according to the preset transmission protocol.

Optionally, the step that the processor acquires the type of the charger connected with the hardware charge interface through the communication control chip may include that:
the processor detects whether the charger supports the preset direct charge protocol through the communication control chip or not, and detects whether the charger supports the high-flux QC protocol or not through the charge chips;
if the charger does not support the preset direct charge protocol and the charger supports the high-flux QC protocol, the processor determines that the charger is a high-voltage charger; and
if the charger does not support the preset direct charge protocol and the charger does not support the high-flux QC protocol, the processor determines that the charger is an ordinary charger.
Optionally, the one or more charge chips may be at least two charge chips arranged in parallel; and
the step that charging is performed through the one or more charge chips according to the second charge mode may include that:
   the processor inputs the charge current to the battery through the at least two charge chips respectively.

Optionally, the method may also include that:
when the charger is connected to the hardware charge interface, the processor establishes a communication connection with the charger through the communication control chip.

According to a fifth aspect of the embodiments of the present disclosure, a charge method is provided, which is applied to any charger in the second aspect, the method including that:
a charge control instruction sent by electronic equipment is received through a communication control chip, the charge control instruction being sent by the electronic equipment when acquiring that the charger is a preset charger; and
the electronic equipment is charged according to the charge control instruction and a first charge mode.

All the advantages and characteristics of the different embodiments of the charger in the second aspect apply to this charge method.

Optionally, the method may also include that:
when the electronic equipment is charged according to the first charge mode, a charge control instruction sent by the electronic equipment after ith detection is received through the communication control chip, the ith detection referring to ith detection about whether a voltage of a battery reaches an ith threshold value or not, the charge control instruction being an instruction generated by the electronic equipment when the voltage of the battery reaches the ith threshold value and i being a positive integer;
a charge current of the charger is controlled through a rectification control chip according to the charge control instruction; and it is set that i=i+1, and the step that the charge control instruction sent by the electronic equipment after the ith detection is received through the communication control chip is re-executed.

Optionally, the step that the charge control instruction sent by the electronic equipment after the ith detection is received through the communication control chip may include that:
an encrypted charge control instruction sent by the electronic equipment after the ith detection is received through a transmission chip.

Optionally, the step that the charge current of the charger is controlled through the rectification control chip according to the charge control instruction may include that:
the encrypted charge control instruction is decrypted to obtain a decrypted charge control instruction through an encryption chip; and
the charge current of the charger is controlled through the rectification control chip according to the decrypted charge control instruction.

Optionally, the method may also include that:
when a hardware charge interface is connected to the electronic equipment, a communication connection is established with the electronic equipment through the communication control chip.

In one particular embodiment, the steps of at least one of the above mentioned charge methods (ie method according to the fourth aspect and/or the method according to the fifth aspect) are determined by computer program instructions.

Consequently, according to a sixth aspect, the invention is also directed to a computer program for executing the steps of a method according to the fourth aspect or according to the fifth aspect as described above when this program is executed by a computer.

This program can use any programming language and take the form of source code, object code or a code intermediate between source code and object code, such as a partially compiled form, or any other desirable form.

The invention is also directed to a computer-readable information medium containing instructions of a computer program as described above.

The information medium can be any entity or device capable of storing the program. For example, the support can include storage means such as a ROM, for example a CD ROM or a microelectronic circuit ROM, or magnetic storage means, for example a diskette (floppy disk) or a hard disk.

Alternatively, the information medium can be an integrated circuit in which the program is incorporated, the circuit being adapted to execute the method in question or to be used in its execution.

It should be understood that the above general descriptions and detailed descriptions below are only exemplary and explanatory and not intended to limit the present disclosure.

### BRIEF DESCRIPTION OF THE DRAWINGS

The accompanying drawings, which are incorporated in and constitute a part of this specification, illustrate embodiments consistent with the present disclosure and, together with the description, serve to explain the principles of the present disclosure.
Fig. 1 is a structure diagram of a charge system according to an exemplary embodiment.
Fig. 2 is a structure diagram of a charge system according to another exemplary embodiment.
Fig. 3 is a structure diagram of a charge system according to another exemplary embodiment.
Fig. 4 is a structure diagram of a TYPE-C interface according to another exemplary embodiment.
Fig. 5 is a flow chart showing a charge method according to an exemplary embodiment.
Fig. 6 is a flow chart showing a charge method according to an exemplary embodiment.
Fig. 7 is a flow chart showing a charge method according to another exemplary embodiment.
Fig. 8 is a flow chart showing acquisition of a type of a charger according to an exemplary embodiment.
Fig. 9 is a flow chart showing a charge method according to another exemplary embodiment.
Fig. 10 is a flow chart showing control over a charge current of a charger according to an exemplary embodiment.
Fig. 11 is a flow chart showing a charge method according to another exemplary embodiment.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the present disclosure. Instead, they are merely examples of apparatuses and methods consistent with aspects related to the present disclosure as recited in the appended claims.

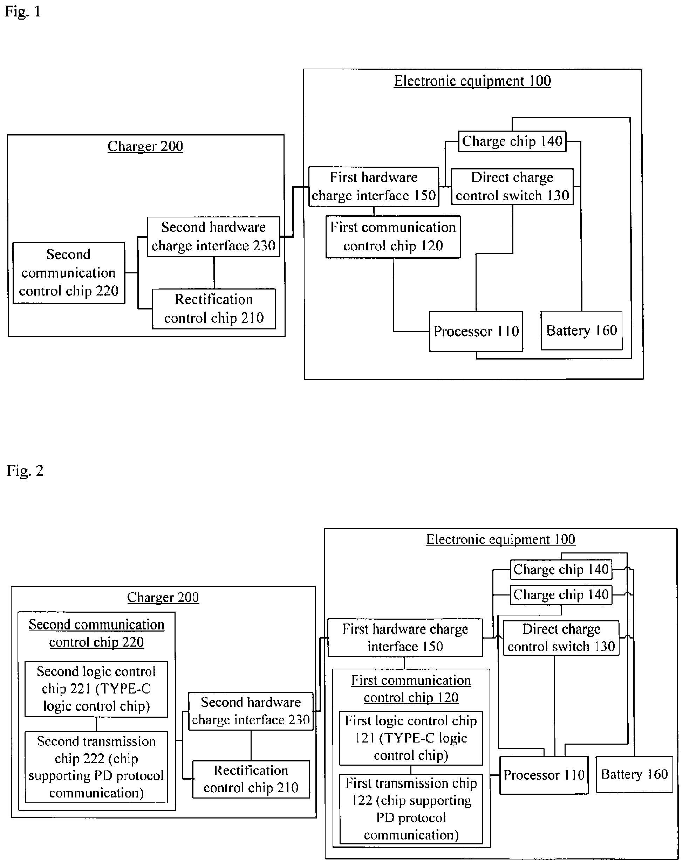

Fig. 1 is a structure diagram of a charge system according to an exemplary embodiment. As shown in Fig. 1, the charge system includes: electronic equipment 100 and a charger 200.

The electronic equipment 100 may include: a processor 110, a first communication control chip 120, a direct charge control switch 130, a charge chip 140, a first hardware charge interface 150 and a battery 160.

The processor 110 is electrically connected with the first communication control chip 120, the processor 110 is electrically connected with the direct charge control switch 130, and the processor 110 is also electrically connected with the charge chip 140.

The first communication control chip 120, the direct charge control switch 130 and the charge chip 140 are all electrically connected with the first hardware charge interface 150.

The direct charge control switch 130 and the charge chip 140 are all electrically connected with the battery 160.

The processor 110 is configured to:
acquire a type of the charger 200 connected with the first hardware charge interface 150 through the first communication control chip 120; when the charger 200 is a preset charger, set the direct charge control switch 130 into an on state and control the charger 200 to perform charging according to a first charge mode; and when the charger 200 is not the preset charger, set the direct charge control switch 130 into an off state and perform charging through the charge chip according to a second charge mode.

Optionally, the first charge mode is a direct charge mode, and the second charge mode is an ordinary charge mode or a high-voltage charge mode.

The first charge mode refers to that the charger controls a charge voltage and charge current of the charger according to a charge control instruction sent by the electronic equipment and directly charges the battery of the electronic equipment according to the controlled charge voltage and charge current. The ordinary charge mode refers to that the charger inputs a standard output voltage into the charge chip in the electronic equipment and charges the battery in the electronic equipment through the charge chip; and optionally, the standard output voltage is 5V. The high-voltage charge mode refers to that the charger inputs a voltage higher than the standard output voltage into the charge chip in the electronic equipment and the charge chip converts the voltage which is input by the charger and higher than the standard output voltage into a charge voltage to charge the battery.

The charger 200 may include: a rectification control chip 210, a second communication control chip 220 and a second hardware charge interface 230.

The second communication control chip 220 and the rectification control chip 210 are both electrically connected with the second hardware charge interface 230.

The second communication control chip 220 is electrically connected with the rectification control chip 210.

The second communication control chip 220 is configured to receive the charge control instruction sent by the electronic equipment 100, and the charge control instruction is sent by the electronic equipment 100 when acquiring that the charger 200 is the preset charger; and the charger 200 charges the electronic equipment 100 according to the charge control instruction and the first charge mode.

From the above, according to the electronic equipment provided by the embodiment of the present disclosure, the processor acquires the type of the charger connected with the hardware charge interface through the communication control chip; when the charger is the preset charger, the processor sets the direct charge control switch into the on state, and controls the charger to perform charging according to the first charge mode; and when the charger is not the preset charger, the processor sets the direct charge control switch into the off state and performs charging through the charge chip according to the second charge mode. The problem that the electronic equipment may not achieve compatibility with both QC methods in the related technology is solved, and an effect of charging the electronic equipment according to different types of chargers by virtue of different charge modes to achieve compatibility of the electronic equipment with different charge modes is achieved.

It is supplemented that the electronic equipment 100 in the charge system shown in Fig. 1 may be independently implemented as a structure of electronic equipment and the charger 200 may be independently implemented as a structure of a charger.

In the electronic equipment 100 of the embodiment shown in Fig. 1, descriptions are made with the condition that there is only one charge chip 140 as an example, and there are no specific limits made to the number of charge chips 140 in the embodiments of the present disclosure. For example, in a charge system provided by an optional embodiment shown in Fig. 2, charge chips 140 in electronic equipment 100 are at least two charge chips arranged in parallel.

Optionally, the at least two charge chips are configured to input the charge current to the battery in the second charge mode respectively so that a function of shunting the charge current is realized, and heat of the charge chips 140 is reduced.

If currents output by the two charge chips are I1 and I2 respectively, an output voltage of the two charge chips is (I1+I2)*R, wherein R is resistance; if the same output voltage is output by one charge chip, a current output by the charge chip is (I1+I2); and therefore, the charge current may be shunted by the at least two charge chips to reduce heat of each charge chip.

Optionally, a difference from the electronic equipment 100 in the embodiment shown in Fig. 1 is that the first communication control chip 120 includes: a first logic control chip 121 and a first transmission chip 122, and the first transmission chip 122 supports a preset transmission protocol, wherein the first logic control chip 121 is electrically connected with the first hardware charge interface 150 and the first transmission chip 122 respectively; and the first transmission chip 122 is electrically connected with the first logic control chip 121 and the processor 110 respectively.

Optionally, the first logic control chip 121 is configured to, when the charger is connected to the first hardware charge interface 150, establish a communication connection with the charger 200, and the first transmission chip 122 is configured to send the charge control instruction generated by the processor 110 to the charger 200 in the first charge mode according to the preset transmission protocol.

Optionally, the preset transmission protocol is a PD protocol.

Optionally, the first hardware charge interface 150 is a USB TYPE-C interface; and the first logic control chip 121 is a TYPE-C logic control chip, and the first transmission chip 122 is a chip supporting PD protocol communication.

A difference from the charger 200 in the embodiment shown in Fig. 1 is that the second communication control chip 220 in the charger 200 in the embodiment shown in Fig. 2 includes: a second logic control chip 221 and a second transmission chip 222, and the second transmission chip 222 supports the preset transmission protocol.

The second logic control chip 221 is electrically connected with the second hardware charge interface 230 and the second transmission chip 222 respectively.

The second transmission chip 222 is electrically connected with the second logic control chip 221.

Optionally, the second logic control chip 221 is configured to, when the second hardware charge interface 230 is connected to the electronic equipment 100, establish a communication connection with the electronic equipment 100, and the second transmission chip 122 is configured to receive the charge control instruction sent by the electronic equipment 100 according to the preset transmission protocol in the first charge mode.

Optionally, the preset transmission protocol is the PD protocol.

Optionally, the second hardware charge interface 230 is a USB TYPE-C interface; and the second logic control chip 221 is a TYPE-C logic control chip, and the second transmission chip 222 is a chip supporting PD protocol communication.

It is supplemented that the electronic equipment 100 in the charge system shown in Fig. 2 may be independently implemented as a structure of electronic equipment and the charger 200 may be independently implemented as a structure of a charger.

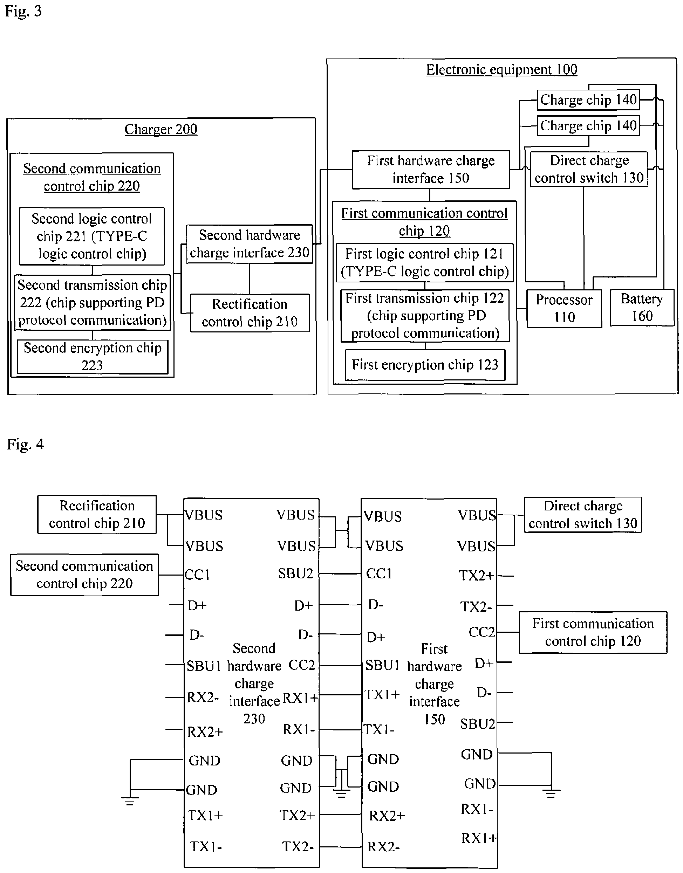

In the charge system in the embodiment shown in Fig. 2, descriptions are made only with the condition that the first communication control chip 120 in the electronic equipment 100 includes the first logic control chip 121 and the first transmission chip 122 and the second communication control chip 220 in the charger 200 includes the second logic control chip 221 and the first transmission chip 222 as an example. As a possible implementation mode, the first communication control chip 120 in the electronic equipment 100 also includes a first encryption chip 123, and the second communication control chip 220 in the charger 200 also includes a second encryption chip 223, specifically as a charge system provided by an optional embodiment shown in Fig. 3.

A difference from the electronic equipment 100 in the embodiment shown in Fig. 2 is that the first communication control chip 120 also includes the first encryption chip 123, wherein the first encryption chip 123 is electrically connected with the first transmission chip 122.

The first encryption chip 123 is configured to encrypt the charge control instruction generated by the processor in the first charge mode so that the first transmission chip 122 sends the encrypted charge control instruction to the charger 200 according to the preset transmission protocol.

A difference from the charger 200 in the embodiment shown in Fig. 2 is that the second communication control chip 220 also includes the second encryption chip 223, wherein the second encryption chip 223 is electrically connected with the second transmission chip 222.

The second encryption chip 223 is configured to decrypt the encrypted charge control instruction sent by the electronic equipment 100 in the first charge mode so that the second transmission chip 222 controls the rectification control chip 210 to reduce the charge current of the charger according to the decrypted charge control instruction.

Optionally, an encryption protocol adopted in the first encryption chip 123 in the electronic equipment 100 and a decryption protocol adopted in the second encryption chip 223 in the charger 200 form a set of encryption and decryption protocols matched for use.

It is supplemented that the electronic equipment 100 in the charge system shown in Fig. 3 may be independently implemented as a structure of electronic equipment and the charger 200 may be independently implemented as a structure of a charger.

In the charge system shown in Fig. 2, descriptions are made only with the condition that the first hardware charge interface 150 in the electronic equipment 100 is a USB TYPE-C interface and the second hardware charge interface 230 in the charger 200 is a USB TYPE-C interface as an example. Specifically, a connection relationship between each pin of the USB TYPE-C interface in the electronic equipment 100 and each pin of the USB TYPE-C interface in the charger is described in an optional embodiment shown in Fig. 4.

In the electronic equipment 100, the USB TYPE-C interface includes: GND pins, VBUS pins and a CC pin.

The direct charge control switch 130 is electrically connected with the VBUS pins in the USB TYPE-C interface; the first communication control chip 120 is electrically connected with the VBUS pins or the CC pin in the USB TYPE-C interface; and the GND pins in the USB TYPE-C interface are grounded.

Optionally, a number of the VBUS pins in the USB TYPE-C interface is at least two, and the at least two VBUS pins may be electrically connected. For example, the number of the VBUS pins in the USB TYPE-C interface is four, and the four VBUS pins are electrically connected with the direct charge control switch 130 after being connected.

Optionally, a number of the GND pins in the USB TYPE-C interface is at least two, and the at least two GND pins are electrically connected. For example, the number of the GND pins 151 in the USB TYPE-C interface is four, and the four GND pins are grounded after being connected.

Optionally, as shown in Fig. 4, the USB TYPE-C interface also includes two D+ pins, two D-pins, an SBU1 pin, an SBU2 pin, a TX1+ pin, a TX1- pin, an RX2+ pin, an RX2- pin, a CC1 pin, a CC2 pin, a TX2+ pin, a TX2- pin, an RX1+ pin and an RX1- pin.

In the charger 200, the USB TYPE-C interface includes: GND pins, VBUS pins and a CC pin.

The rectification control chip 210 is electrically connected with the VBUS pins in the USB TYPE-C interface; the second communication control chip 220 is electrically connected with the VBUS pins or the CC pin in the USB TYPE-C interface; and the GND pins in the USB TYPE-C interface are grounded.

Optionally, a number of the VBUS pins in the USB TYPE-C interface is at least two, and the at least two VBUS pins may be electrically connected. For example, the number of the VBUS pins in the USB TYPE-C interface is four, and the four VBUS pins are electrically connected with the rectification control chip 210 after being connected.

Optionally, a number of the GND pins in the USB TYPE-C interface is at least two, and the at least two GND pins are electrically connected. For example, the number of the GND pins in the USB TYPE-C interface is four, and the four GND pins are grounded after being connected.

Optionally, as shown in Fig. 4, the USB TYPE-C interface also includes two D+ pins, two D-pins, an SBU1 pin, an SBU2 pin, a TX1+ pin, a TX1- pin, an RX2+ pin, an RX2- pin, a TX2+ pin, a TX2- pin, a CC1 pin, a CC2 pin, an RX1+ pin and an RX1- pin.

Fig. 4 mainly shows a schematic diagram illustrating connection of the pins of the USB TYPE-C interface in the electronic equipment 100 and the USB TYPE-C interface in the charger 200, and a connection relationship between the other chips in the electronic equipment 100 and the charger 200 refers to the embodiments shown in Fig. 1 to Fig. 3.

It is supplemented that the electronic equipment 100 in the charge system shown in Fig. 4 may be independently implemented as a structure of electronic equipment and the charger 200 may be independently implemented as a structure of a charger.

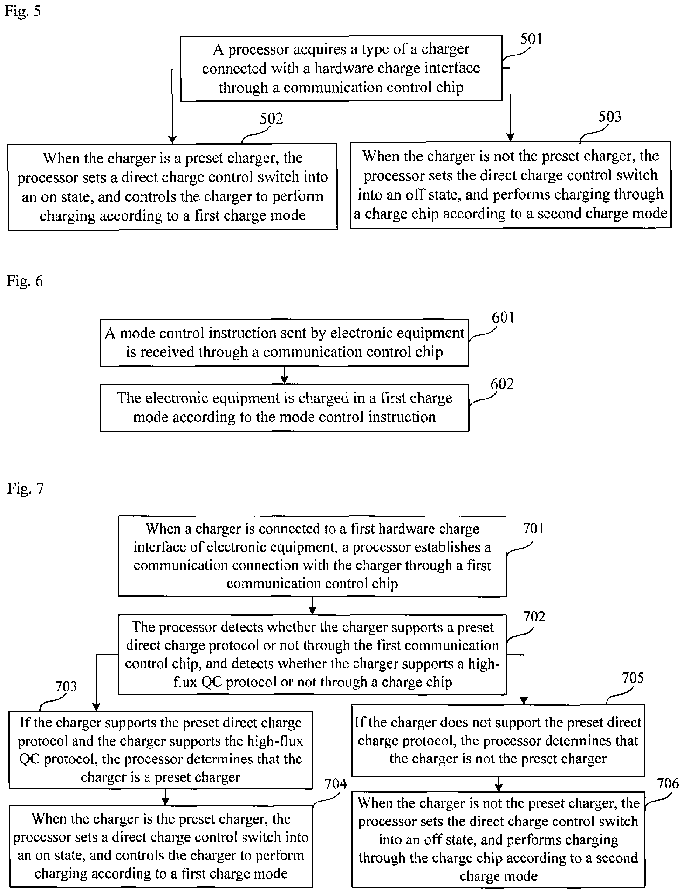

Fig. 5 is a flow chart showing a charge method according to an exemplary embodiment. As shown in Fig. 5, the charge method is applied to electronic equipment 100 in the embodiment shown in Fig. 1, and includes the following steps.

In Step 501, a processor acquires a type of a charger connected with a hardware charge interface through a communication control chip.

In Step 502, when the charger is a preset charger, the processor sets a direct charge control switch into an on state, and controls the charger to perform charging according to a first charge mode.

Optionally, in the first charge mode, a charge current is input from a second hardware charge interface in the charger to a first hardware charge interface of the electronic equipment, and then is directly input to a battery to charge the battery through the direct charge control switch.

In Step 503, when the charger is not the preset charger, the processor sets the direct charge control switch into an off state, and performs charging through a charge chip according to a second charge mode.

Optionally, in the second charge mode, the charge current is input from the second hardware charge interface of the charger to the first hardware charge interface of the electronic equipment, and then is input to the battery to charge the battery through the charge chip.

From the above, according to the charge method provided by the embodiment of the present disclosure, the processor acquires the type of the charger connected with the hardware charge interface through the communication control chip; when the charger is the preset charger, the processor sets the direct charge control switch into the on state, and controls the charger to perform charging according to the first charge mode; and when the charger is not the preset charger, the processor sets the direct charge control switch into the off state, and performs charging through the charge chip according to the second charge mode. The problem that the electronic equipment may not achieve compatibility with both QC methods in the related technology is solved, and an effect of charging the electronic equipment according to different types of chargers by virtue of different charge modes to achieve compatibility of the electronic equipment with different charge modes is achieved.

Fig. 6 is a flow chart showing a charge method according to an exemplary embodiment. As shown in Fig. 6, the charge method is applied to a charger 200 in the embodiment shown in Fig. 1, and includes the following steps.

In Step 601, a charge control instruction sent by electronic equipment is received through a communication control chip, the charge control instruction being sent by the electronic equipment when acquiring that the charger is a preset charger.

In Step 602, the electronic equipment is charged according to the charge control instruction and a first charge mode.

From the above, according to the charge method provided by the embodiment of the present disclosure, the charge control instruction sent by the electronic equipment is received through the communication control chip; and the electronic equipment is charged according to the charge control instruction and the first charge mode. The problem that the charger may charge the electronic equipment only according to own charge current in the related technology is solved, and an effect that the charger controls the charge current of the charger in the first charge mode to make the charge current of the charger more consistent with a requirement of the electronic equipment according to the received charge control instruction sent by the electronic equipment is achieved.

It is supplemented that the charger receives the charge control instruction sent by the electronic equipment through the communication control chip when the electronic equipment is charged according to the first charge mode; the charge control instruction is generated when the processor detects that a voltage of a battery reaches an ith threshold value or not for the ith time through charge chip, and optionally, the ith detection refers to ith detection about whether the voltage of the battery reaches the ith threshold value or not; the charge control instruction is an instruction generated by the electronic equipment when the voltage of the battery reaches the ith threshold value, and i is a positive integer; the charger controls the charge current of the charger through a rectification control chip according to the charge control instruction. Optionally, after the electronic equipment is charged according to the first charge mode, it is set that i=i+1, and the step that the charge control instruction sent by the electronic equipment after the ith detection is received through the communication control chip is re-executed. For example, the charger reduces the charge current of the charger and keeps a charge voltage unchanged through the rectification control chip according to the charge control instruction.

Fig. 7 is a flow chart showing a charge method according to another exemplary embodiment. As shown in Fig. 7, the charge method is applied to electronic equipment 100 in the embodiment shown in Fig. 2, and includes the following steps.

In Step 701, when a charger is connected to a first hardware charge interface of the electronic equipment, a processor establishes a communication connection with the charger through a first communication control chip.

When the charger is connected to the first hardware charge interface of the electronic equipment, the processor in the electronic equipment establishes a connection with the charger through a first logic control chip. The processor determines a master-slave relationship between the electronic equipment and the charger through the first logic control chip. For example, the processor determines that the electronic equipment is slave equipment and the charger is master equipment through the first logic control chip.

Correspondingly, when a second hardware charge interface of the charger is connected to the electronic equipment, the charger establishes a communication connection with the electronic equipment through a second communication control chip.

In Step 702, the processor detects whether the charger supports a preset direct charge protocol or not through the first communication control chip, and detects whether the charger supports a high-flux QC protocol or not through charge chips.

Optionally, after the communication connection is established between the first communication control chip of the electronic equipment and the charger, a process that the processor of the electronic equipment detects whether the charger supports the preset direct charge protocol or not through the first communication control chip is as follows: the processor of the electronic equipment sends preset information to the charger through a first transmission chip according to a preset transmission protocol; the charger receives the preset information through a second transmission chip; if the charger sends response information to the electronic equipment according to the received preset information and the preset transmission protocol, the processor determines that the charger supports the preset direct charge protocol when the processor of the electronic equipment receives the response information through the first transmission chip.

Optionally, the processor of the electronic equipment simultaneously detects whether the charger supports the high-flux QC protocol or not through the charge chip when detecting whether the charger supports the preset direct charge protocol or not through the first communication control chip.

By detection of Step 702, charging may be performed by virtue of the following two possible charge modes. A process of performing charging according to a first charge mode includes Step 703 to Step 704; and a process of performing charging according to a second charge mode includes Step 705 to Step 706.

In Step 703, if the charger supports the preset direct charge protocol and the charger supports the high-flux QC protocol, the processor determines that the charger is a preset charger.

When the processor of the electronic equipment detects that the charger supports the preset direct charge protocol and the charger supports the high-flux QC protocol, the processor determines that the charger is the preset charger, and optionally, the preset charger includes a direct charger.

In Step 704, when the charger is the preset charger, the processor sets a direct charge control switch into an on state, and controls the charger to perform charging according to a first charge mode.

After the processor of the electronic equipment determines that the charger is the preset charger, the processor sets the direct charge control switch of the electronic equipment into the on state, and directly controls the charger to charge the electronic equipment through the direct charge control switch according to the first charge mode. Optionally, the first charge mode is a direct charge mode.

In Step 705, if the charger does not support the preset direct charge protocol, the processor determines that the charger is not the preset charger.

Optionally, if the processor of the electronic equipment detects that the charger does not support the preset direct charge protocol and the charger supports the high-flux QC protocol, the processor determines that the charger is a high-voltage charger.

Optionally, if the processor of the electronic equipment detects that the charger does not support the preset direct charge protocol and the charger does not support the high-flux QC protocol, the processor determines that the charger is an ordinary charger.

In Step 706, when the charger is not the preset charger, the processor sets the direct charge control switch into an off state, and performs charging through the charge chip according to a second charge mode.

Optionally, the second charge mode includes a high-voltage charge mode and an ordinary charge mode.

After determining that the charger is the high-voltage charger, the processor sets the direct charge control switch into the off state, and performs charging through the charge chip according to the high-voltage charge mode. Optionally, when the processor performs charging through the charge chip according to the high-voltage charge mode, a number of the charge chips is at least two, and the at least two charge chips input charge currents into a battery respectively to realize a current shunting function of the charge chips and achieve an effect of reducing heat of the charge chips.

After determining that the charger is the ordinary charger, the processor sets the direct charge control switch into the off state, and performs charging through the charge chip according to the ordinary charge mode.

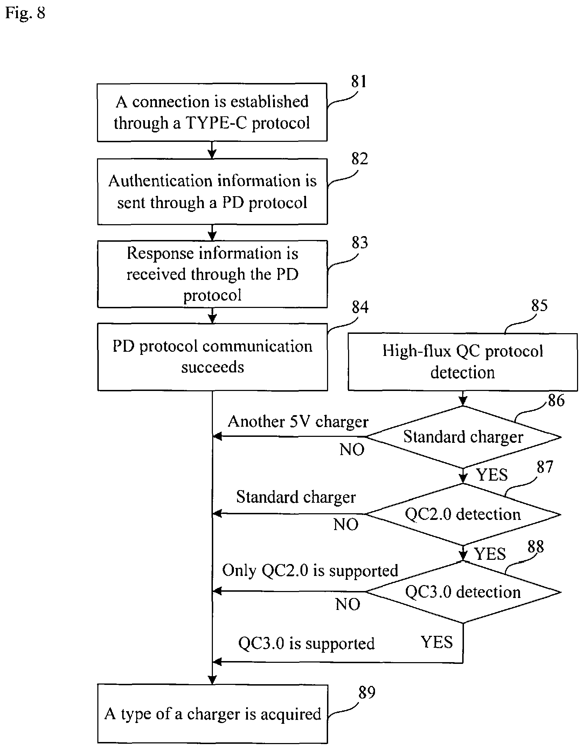

In an exemplary example, Fig. 8 is a simple flow chart showing charger type acquisition of a processor. In Step 81, when the charger is connected to the USB TYPE-C interface of the electronic equipment, the processor establishes the communication connection with the charger through a TYPE-C protocol, and determines that the charger is master equipment and the electronic equipment is slave equipment through a TYPE-C logic control chip. In Step 82, the processor sends authentication information of the preset direct charge protocol to the charger through the transmission chip supporting PD protocol communication according to the PD protocol, and the charger receives the authentication information of the preset direct charge protocol from the electronic equipment through the transmission chip supporting PD protocol communication, and acquires content in the authentication information of the preset direct charge protocol through the PD protocol. In Step 83, the charger sends response information of the preset direct charge protocol to the electronic equipment through the transmission chip supporting PD protocol communication according to the PD protocol. In Step 84, after the electronic equipment receives the response information of the preset direct charge protocol sent by the charger according to the PD protocol, the processor determines that the charger supports the preset direct charge protocol, and the charger successfully performs PD protocol communication with the electronic equipment. If the electronic equipment does not receive the response information of the preset direct charge protocol sent by the charger according to the PD protocol, the processor determines that the charger does not support the preset direct charge protocol. Meanwhile, in Step 85, the processor detects whether the charger supports the high-flux QC protocol or not through the charge chips, wherein detection about whether to support the high-flux QC protocol or not may include: in Step 86, it is detected whether the charger is a standard charger or not at first, and if the charger is not the standard charger, the charge chips determine that the charger is another 5V charger; in Step 87, if the charger is the standard charger, it is detected whether the charger supports QC2.0 or not through the charging chips, and if QC2.0 is not supported, the charging chips determine that the charger is the standard charger; and in Step 88, if QC2.0 is supported, the charging chips detect whether the charger supports QC3.0 or not, the charging chips determine that the charger is a charger only supporting QC2.0 if QC3.0 is not supported, and if QC3.0 is supported, the charging chips determine that the charger is a charger supporting QC3.0. In Step 89, if the charger supports the preset direct charge protocol and the high-flux QC protocol, the processor determines that the charger is the preset charger; if the charger does not support the preset direct charge protocol and supports the high-flux QC protocol, the processor determines that the charger is a high-voltage charger; and if the charger does not support the preset direct charge protocol and does not support the high-flux QC protocol, the processor determines that the charger is an ordinary charger.

From the above, according to the charge method provided by the embodiment of the present disclosure, when the electronic equipment is charged through the communication control chip according to the first charge mode, the charge control instruction sent by the electronic equipment is received; and a rectification control chip is controlled to reduce the charge current of the charger according to the charge control instruction. The problem that the charger may charge the electronic equipment only according to own charge current in the related technology is solved, and an effect that the charger controls the charge current of the charger in the first charge mode to make the charge current of the charger more consistent with a requirement of the electronic equipment according to the received charge control instruction sent by the electronic equipment is achieved.

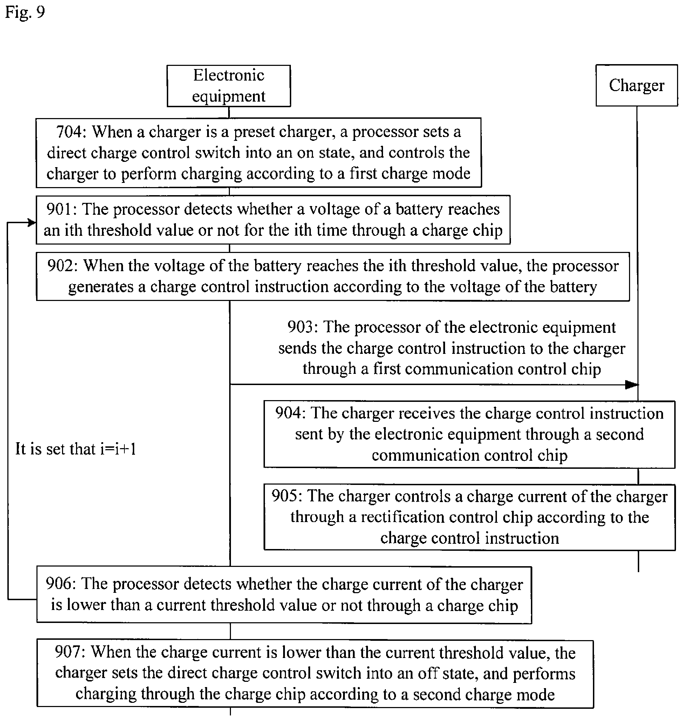

On the basis of the embodiment shown in Fig. 7, when the processor sets the direct charge control switch into the on state and controls the charger to perform charging according to the first charge mode, the charge method may also include the following steps, as shown in Fig. 9.

In Step 901, the processor detects whether a voltage of the battery reaches an ith threshold value or not for the ith time through the charge chip.

When the processor controls the charger to charge the electronic equipment according to the first charge mode, the processor detects whether the voltage of the battery reaches the ith threshold value or not for the ith time at a preset time interval through the charge chip, i being a positive integer.

In an exemplary example, when the processor controls the charger to charge the electronic equipment according to the first charge mode, the processor detects whether the voltage of the battery of the electronic equipment reaches 4.2 volts (V) or not at first through the charge chip.

In Step 902, when the voltage of the battery reaches the ith threshold value, the processor generates a charge control instruction according to the voltage of the battery.

If the processor detects that the voltage of the battery reaches the ith threshold value through the charge chip, the processor generates the charge control instruction according to the detected voltage of the battery, the charge control instruction being configured to control the charger to control the charge current.

In Step 903, the processor of the electronic equipment sends the charge control instruction to the charger through the first communication control chip.

Optionally, the processor sends the generated charge control instruction to the charger through the first transmission chip according to the preset transmission protocol.

In Step 904, the charger receives the charge control instruction sent by the electronic equipment through the second communication control chip.

Optionally, the charger receives the charge control instruction sent by the first transmission chip of the electronic equipment according to the preset transmission protocol through the second transmission chip.

In Step 905, the charger controls the charge current of the charger through a rectification control chip according to the charge control instruction.

Optionally, after the processor of the electronic equipment sends the charge control instruction, it is set that i=i+1, and the step that the processor detects whether the voltage of the battery reaches the ith threshold value or not for the ith time through the charge chip is re-executed, the ith threshold value being smaller than or equal to an (i+1)th threshold value.

In Step 906, the processor detects whether the charge current of the charger is lower than a current threshold value or not through the charge chip.

Optionally, the processor detects whether the charge current of the charger is lower than the current threshold value or not through the charge chip after sending the charge control instruction to the charger for the ith time through the first transmission chip.

For example, the charger detects whether the charge current of the charger is lower than 1 ampere (A) or not through the charge chip.

In Step 907, when the charge current is lower than the current threshold value, the charger sets the direct charge control switch into the off state, and performs charging through the charge chip according to the second charge mode.

When the processor detects that the charge current of the charger is lower than the current threshold value, the processor sets the direct charge control switch into the off state, and performs charging through the charge chip according to the second charge mode. That is, when the processor detects that the charge current of the charger is lower than the current threshold value, the processor switches the charger from the first charge mode to the second charge mode for charging.

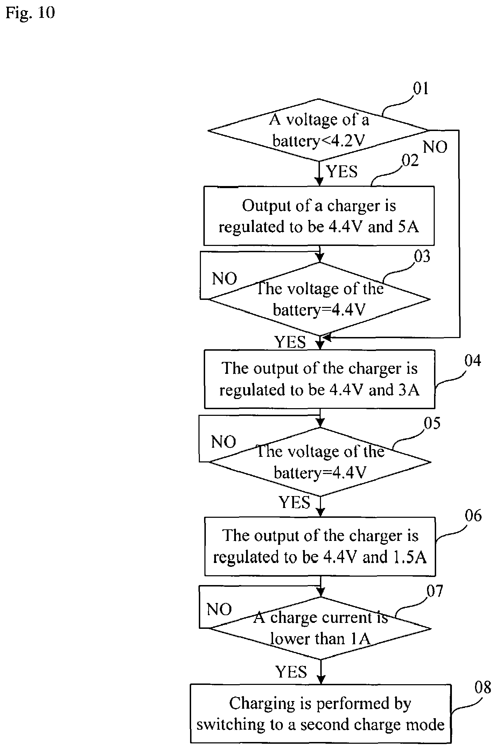

In an exemplary example, Fig. 10 is a simple flow chart showing control of a processor over a charge current of a charger through a second transmission chip. In Step 01, the processor detects whether the voltage of the battery is lower than 4.2V or not through the charge chip. In Step 02, if the voltage of the battery is higher than 4.2V, the processor generates a charge control instruction according to the voltage of the battery, and sends it to the charger through the first transmission chip, and the charger controls the rectification control chip to reduce the charge current according to the charge control instruction, regulates a charge voltage of the charger to be 4.4V and regulates the charge current to be 5A. In Step 03, after a first preset time, the processor detects whether the voltage of the battery reaches 4.4V or not through the charge chip. In step 04, if the voltage of the battery reaches 4.4V, the processor generates a charge control instruction according to the voltage of the battery, and sends it to the charger through the first transmission chip, and the charger controls the rectification control chip to reduce the charge current according to the charge control instruction, regulates the charge voltage of the charger to be 4.4V and regulates the charge current to be 3A. In Step 05, after a second preset time, the processor detects whether the voltage of the battery reaches 4.4V or not through the charge chip. In Step 06, if the voltage of the battery reaches 4.4V, the processor generates a charge control instruction according to the voltage of the battery, and sends it to the charger through the first transmission chip, and the charger controls the rectification control chip to reduce the charge current according to the charge control instruction, regulates the charge voltage of the charger to be 4.4V and regulates the charge current to be 1.5A. In Step 07, along with gradual increase of the voltage of the battery, the charge current may be gradually decreased, and after a third preset time, the processor detects whether the charge current of the charger is lower than 1A or not through the charge chip. In Step 08, if the charge current is lower than 1A, the processor controls the direct charge control switch to be in the off state, and performs charging through the charge chip according to the second charge mode. Herein, when the voltage of the battery is equal to the charge voltage of the charger, the charge voltage may not charge the battery, and the voltage, detected by the charge chip, of the battery is abnormally high due to existence of impedance on the battery and a circuit board, so that the voltage of the battery is reduced in a manner of reducing the charge current to achieve an effect of charging the battery more quickly.

From the above, according to the charge method provided by the embodiment of the present disclosure, the processor acquires the type of the charger connected with the hardware charge interface through the communication control chip; and when the charger is the preset charger, the processor sets the direct charge control switch into the on state, and controls the charger to perform charging according to the first charge mode. The problem that the electronic equipment may not achieve compatibility with both QC methods in the related technology is solved, and an effect of charging the electronic equipment according to different types of chargers by virtue of different charge modes to achieve compatibility of the electronic equipment with different charge modes is achieved.

In addition, the processor sends the charge control instruction to the charger through the first transmission chip according to the preset transmission protocol, so that stability of the charge control instruction during data transmission is favorably ensured, and security in a charge process is improved.

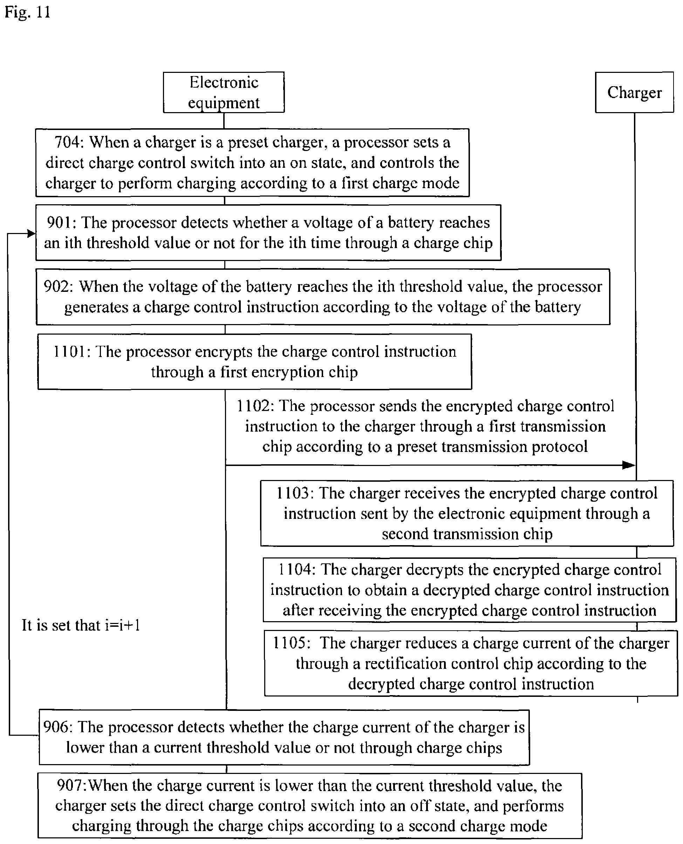

On the basis of the embodiment shown in Fig. 9, when the electronic equipment is the electronic equipment 100 shown in Fig. 4, Step 903 to Step 904 may be replaced with the following Step 1101 to Step 1103, as shown in Fig. 11.

In Step 1101, the processor encrypts the charge control instruction through a first encryption chip.

After generating the charge control instruction, the processor encrypts the generated charge control instruction through the first encryption chip.

In Step 1102, the processor sends the encrypted charge control instruction to the charger through the first transmission chip according to the preset transmission protocol.

In Step 1103, the charger receives the encrypted charge control instruction sent by the electronic equipment through the second transmission chip.

The charger receives the encrypted charge control instruction sent by the first transmission chip of the electronic equipment through the second transmission chip according to the preset transmission protocol.

In Step 1104, the charger decrypts the encrypted charge control instruction to obtain a decrypted charge control instruction after receiving the encrypted charge control instruction.

The charger decrypts the encrypted charge control instruction to obtain the decrypted charge control instruction through a second encryption chip after receiving the encrypted charge control instruction.

In Step 1105, the charger reduces the charge current of the charger through the rectification control chip according to the decrypted charge control instruction.

From the above, according to the charge method provided by the embodiment of the present disclosure, the processor encrypts the charge control instruction through the second encryption chip and sends the encrypted charge control instruction to the charger so that effects of stability and security of the charge control instruction in a data transmission process are ensured.

It is supplemented that the processor may perform identity authentication with a Microcontroller Unit (MCU) in the charger in advance before sending the charge control instruction to the charger through the first transmission chip according to the preset transmission protocol. In case of successful identity authentication, the charge control instruction is sent to the charger through the first transmission chip according to the preset transmission protocol. A process of identity authentication performed in advance between the processor and the charger may include that: the processor sends identity authentication information to the charger in a preset form; the charger receives the identity authentication information sent by the processor through the MCU, analyzes content contained in the identity authentication information according to the preset form, and verifies an identity of the electronic equipment; the charger sends an identity authentication response to the charger through the MCU according to the preset form when successfully verifying the identity of the electronic equipment; and the processor performs identity authentication on the charger according to the preset form, and in case of successful identity authentication, sends the charge control instruction to the charger through the first transmission chip according to the preset transmission protocol.

## Claims

1. Electronic equipment (100), comprising: a processor (110), a communication control chip (120), a direct charge control switch (130), one or more charge chips (140), a hardware charge interface (150)and a battery (160), wherein
the processor (110) is electrically connected with the communication control chip (120), the processor (110) is electrically connected with the direct charge control switch (130), and the processor (110) is also electrically connected with the one or more charge chips (140);
the communication control chip (120), the direct charge control switch (130) and the one or more charge chips (140) are all electrically connected with the hardware charge interface (150); and
the direct charge control switch (130) and the one or more charge chips (140) are all be electrically connected with the battery (160).

2. The electronic equipment (100) according to claim 1, wherein the one or more charge chips (140) are at least two charge chips (140) arranged in parallel.

3. The electronic equipment (100) according to claim 1 or 2, wherein the communication control chip (120) comprises: a logic control chip (121) and a transmission chip (122), and the transmission chip (122) supports a preset transmission protocol;
the logic control chip (121) is electrically connected with the hardware charge interface (150) and the transmission chip (122) respectively; and
the transmission chip (122) is electrically connected with the logic control chip (121) and the processor (110) respectively,
wherein the preset transmission protocol is a Power Delivery, PD, protocol.

4. The electronic equipment (100) according to any one of claims 1-3, wherein the hardware charge interface (150) is a Universal Serial Bus TYPE-C, USB TYPE-C, interface;
the USB TYPE-C interface comprises: a Ground, GND, pin, Voltage Bus, VBUS, pins and a Configuration Channel, CC, pin;
the direct charge control switch (130) is electrically connected with the VBUS pins in the USB TYPE-C interface;
the communication control chip (120) is electrically connected with the VBUS pins or the CC pin in the USB TYPE-C interface; and
the GND pin in the USB TYPE-C interface is grounded.

5. The electronic equipment (100) according to claim 4, wherein a number of the VBUS pins is at least two; and the at least two VBUS pins are electrically connected.

6. The electronic equipment (100) according to any one of claims 3 to 5, wherein the communication control chip (120) also comprises an encryption chip (123); and the encryption chip (123) is electrically connected with the transmission chip (122).

7. A charger (200), comprising: a rectification control chip (210), a communication control chip (220) and a hardware charge interface (230), wherein
the communication control chip (220) and the rectification control chip (210) are both electrically connected with the hardware charge interface (230); and
the communication control chip (220) is electrically connected with the rectification control chip (210).

8. The charger (200) according to claim 7, wherein the communication control chip (220) comprises a logic control chip (221) and a transmission chip (222), and the transmission chip (222) supports a preset transmission protocol;
the logic control chip (221) is electrically connected with the hardware charge interface (230) and the transmission chip (222) respectively; and
the transmission chip (222) is electrically connected with the logic control chip (221).

9. The charger (200) according to claim 8, wherein the preset transmission protocol is a Power Delivery, PD, protocol.

10. The charger (200) according to any one of claims 7 to 9, wherein the hardware charge interface (230) is a Universal Serial Bus TYPE-C, USB TYPE-C, interface; the USB TYPR-C interface comprises: a Ground, GND, pin, Voltage Bus, VBUS, pins and a Configuration Channel, CC, pin;
the rectification control chip (210) is electrically connected with the VBUS pins in the USB TYPE-C interface;
the communication control chip (220) is electrically connected with the VBUS pins or the CC pin in the USB TYPE-C interface; and
the GND pin in the USB TYPE-C interface is grounded.

11. The charger (200) according to claim 10, wherein a number of the VBUS pins is at least two; and the at least two VBUS pins are electrically connected.

12. The charger (200) according to any one of claims 8 to 11, wherein the communication control chip (220) also comprises an encryption chip (223); and the encryption chip (223) is electrically connected with the transmission chip (222).

13. A charge method, applied to the electronic equipment (100) according to any one of claims 1-6, the method comprising:
acquiring (501), by a processor, a type of a charger connected with a hardware charge interface through a communication control chip;
when the charger is a preset charger, setting (502), by the processor, a direct charge control switch into an on state, and controlling the charger to perform charging according to a first charge mode; and
when the charger is not the preset charger, setting (503), by the processor, the direct charge control switch into an off state, and performing charging through one or more charge chips according to a second charge mode.

14. A charge method, applied to the charger according to any one of claims 7-12, the method comprising:
receiving (601) a charge control instruction sent by electronic equipment through a communication control chip, the charge control instruction being sent by the electronic equipment when acquiring that the charger is a preset charger; and
charging (602) the electronic equipment according to the charge control instruction and a first charge mode.
